# EUROPEAN PATENT APPLICATION

(11) **EP 4 749 754 A1**
(43) Date of publication of application: **27.05.2026**
(21) Application number: 25195677.7
(22) Date of filing: 13.08.2025
(51) Int. Cl.: H01M 10/36, H01M 4/38, H01M 4/62, H01M 4/02

(54) **MODIFIED POSITIVE ELECTRODE STRUCTURE, ZINC-VANADIUM BATTERY, AND MANUFACTURING METHODS THEREOF**

(30) Priority: 22.11.2024 TW 113145149
(71) Applicant: APh ePower Co., Ltd., Kaohsiung City 821 (TW)
(72) Inventor: TSAI, Shih Po-Ta, 821 Kaohsiung City (TW); CHEN, Wei-Ting, 821 Kaohsiung City (TW); WANG, Yi-Hsiu, 821 Kaohsiung City (TW); WU, Chien-Ting, 821 Kaohsiung City (TW)
(74) Representative: Viering, Jentschura & Partner mbB Patent- und Rechtsanwälte

(57) **Abstract**

A zinc-vanadium battery (1) includes a modified positive electrode structure (including a positive electrode (10) and a modified layer (12)), a separator (14), a negative electrode (16), and an aqueous electrolyte (18). The modified layer (12) on the positive electrode (10) includes 70-95 parts by weight of vanadium-based material, 3-45 parts by weight of a conductive agent, and 3-45 parts by weight of a binder. The separator (14) is on the modified layer (12), and the negative electrode (16) is on the separator (14). The positive electrode (10), the modified layer (12), the separator (14), and the negative electrode (16) are in the aqueous electrolyte (18). In the X-ray diffraction patterns of the vanadium-based material measured by XRD using CuKα1 ray, an intensity ratio of a peak at 2θ=8°±1.0° over a peak at 2θ=20°±1.0° (denoted as I₈ and I₂₀, respectively) satisfies 0<I₈/I₂₀≤1.4. Furthermore, the modified positive electrode structure, a method of manufacturing the modified positive electrode structure, and a method (2) of manufacturing the zinc-vanadium battery (1) are provided.

## Description

### BACKGROUND

### Technical Field

The instant disclosure relates to a modified positive electrode structure and a manufacturing method thereof, particularly, a modified positive electrode structure comprising a modified vanadium-based material and a manufacturing method thereof. The instant disclosure also relates to a zinc-vanadium battery and a manufacturing method thereof, particularly, a zinc-vanadium battery comprising a modified positive electrode structure comprising a modified vanadium-based material and a manufacturing method thereof.

### Related Art

As known to the inventor, existing batteries that use zinc as the negative electrode have many structural and performance limitations. For example, the capacities per gram of such batteries using zinc as the negative electrode are about 100-200 mAh/g, and there is still room for improvement. In addition, in the initial stage of charging and discharging of such batteries using zinc as the negative electrode, because the discharge environment of the batteries is not completely balanced, the discharge reaction would also be unstable.

For another example, in such batteries using zinc as the negative electrode, the negative electrode will gradually accumulate galvanized products during use and the galvanized products are further developed into branch-like crystals (or dendrites) in the electrolyte; these dendrites will easily cause punctures and cause the batteries to fail.

### SUMMARY

To solve the aforementioned problem, the inventors of the instant disclosure are aware that the technical field is mainly focused on adjusting the electrolyte. However, although adjusting the electrolyte may improve the discharge capacity of the batteries, the process cost of adjusting the electrolyte is relatively high.

In light of this, a modified positive electrode structure according to some embodiments of the instant disclosure is provided. The modified positive electrode structure comprises a positive electrode and a modified layer. The positive electrode comprises titanium. The modified layer is on the positive electrode. The modified layer comprises a vanadium-based material, 70-95 parts by weight; a conductive agent, 3-45 parts by weight; and a binder, 3-45 parts by weight. In an X-ray diffraction pattern of the vanadium-based material measured by an X-ray diffractometer (XRD) using CuKα1 ray, with an intensity of a peak at 2θ=8°±1.0° denoted as I₈ and an intensity of a peak at 2θ=20°±1.0° denoted as I₂₀, a ratio of I₈ over I₂₀ (I₈/I₂₀) satisfies 0<I₈/I₂₀≤1.4.

Furthermore, a method of manufacturing the modified positive electrode structure according to some embodiments of the instant disclosure is also provided. The method comprises a first homogenization step, a drying step, a second homogenization step, and a coating step. The first homogenization step comprises mixing vanadium oxide, water, and hydrogen peroxide to conduct homogenization to obtain a vanadium-based homogeneous mixture. The drying step comprises freeze-drying or heat-drying the vanadium-based homogeneous mixture to obtain the vanadium-based material. The second homogenization step comprises mixing the vanadium-based material, the conductive agent, and the binder to conduct homogenization to obtain a modified material. The coating step comprises coating the modified material onto the positive electrode to form the modified layer on the positive electrode, thereby obtaining the modified positive electrode structure.

Moreover, a zinc-vanadium battery according to some embodiments of the instant disclosure is further provided. The zinc-vanadium battery comprises a modified positive electrode structure (comprises a positive electrode and a modified layer), a separator, a negative electrode, and an aqueous electrolyte. The positive electrode comprises titanium. The modified layer is on the positive electrode. The modified layer comprises a vanadium-based material, 70-95 parts by weight; a conductive agent, 3-45 parts by weight; and a binder, 3-45 parts by weight. The separator is on the modified layer. The negative electrode comprises zinc. The negative electrode is on the separator. The positive electrode, the modified layer, the separator, and the negative electrode are in the aqueous electrolyte. In an X-ray diffraction pattern of the vanadium-based material measured by an X-ray diffractometer (XRD) using CuKα1 ray, with an intensity of a peak at 2θ=8°±1.0° denoted as I₈ and an intensity of a peak at 2θ=20°±1.0° denoted as I₂₀, a ratio of I₈ over I₂₀ (I₈/I₂₀) satisfies 0<I₈/I₂₀≤1.4.

In addition, a method of manufacturing the zinc-vanadium battery according to some embodiments of the instant disclosure is also provided. The method comprises a first homogenization step, a drying step, a second homogenization step, a coating step, and an assembling step. The first homogenization step comprises mixing vanadium oxide, water, and hydrogen peroxide to conduct homogenization to obtain a vanadium-based homogeneous mixture. The drying step comprises freeze-drying or heat-drying the vanadium-based homogeneous mixture to obtain the vanadium-based material. The second homogenization step comprises mixing the vanadium-based material, the conductive agent, and the binder to conduct homogenization to obtain a modified material. The coating step comprises coating the modified material onto the positive electrode to form the modified layer on the positive electrode, thereby obtaining the modified positive electrode structure. The assembling step comprises sequentially assembling the separator and the negative electrode on the modified layer and immersing the positive electrode, the modified layer, the separator, and the negative electrode in the aqueous electrolyte to obtain the zinc-vanadium battery.

### BRIEF DESCRIPTION OF THE DRAWINGS

The instant disclosure will become more fully understood from the detailed description given herein below for illustration only, and thus not limitative of the instant disclosure, wherein:
FIG. 1 illustrates a schematic structural view of a zinc-vanadium battery comprising a modified positive electrode structure according to some embodiments;
FIG. 2 illustrates a flowchart of a method of manufacturing a zinc-vanadium battery comprising a modified positive electrode structure according to some embodiments;
FIG. 3A is an X-ray diffraction pattern of a vanadium-based material of Comparative Example (known to the inventor) measured by an XRD using CuKα1 ray;
FIG. 3B is an X-ray diffraction pattern of a vanadium-based material of Experimental Example 1 (according to some embodiments of the instant disclosure) measured by an XRD using CuKα1 ray;
FIG. 3C is an X-ray diffraction pattern of a vanadium-based material of Experimental Example 2 (according to some other embodiments of the instant disclosure) measured by an XRD using CuKα1 ray;
FIG. 4 is a graph comparing discharge capacities of a zinc-vanadium battery comprising the vanadium-based material of Comparative Example and a zinc-vanadium battery comprising the vanadium-based material of Experimental Example 2; and
FIG. 5 is a graph comparing average service life of batteries of a zinc-vanadium battery comprising the vanadium-based material of Comparative Example and a zinc-vanadium battery comprising the vanadium-based material of Experimental Example 2.

### DETAILED DESCRIPTION

The term "about" may vary in different technologies and within a range of deviations understood by a person of ordinary skill in the art. The term "about" in conjunction with a particular distance or dimension should be interpreted as not excluding slight deviations from the specified distance or dimension. For example, the term "about" may include a deviation of up to 10% of the specified amount, although the embodiments of the instant disclosure are not so limited thereto. The term "about" in connection with a numerical value x may mean x±5 or 10% of the specified value, although the embodiments of the instant disclosure are not limited thereto.

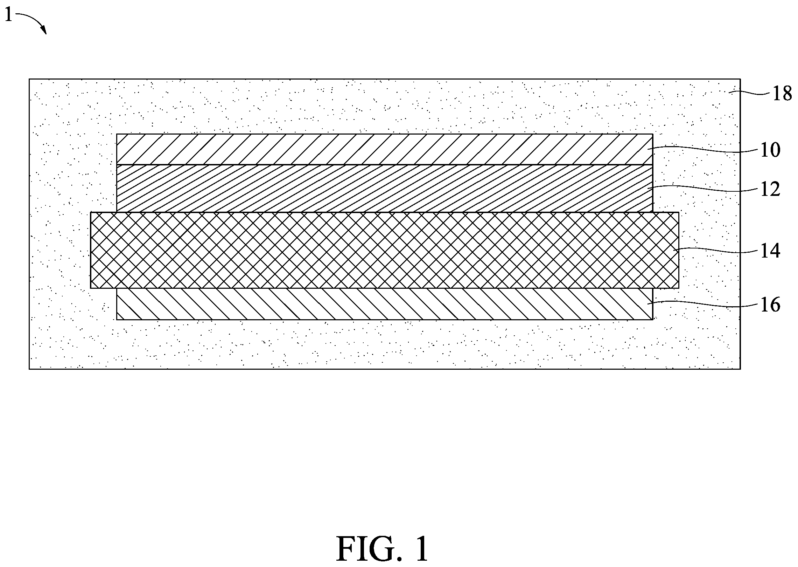

Please refer to FIG. 1. FIG. 1 illustrates a schematic structural view of a zinc-vanadium battery 1 comprising a modified positive electrode structure according to some embodiments. In FIG. 1, a modified positive electrode structure is provided, and the modified positive electrode structure comprises a positive electrode 10 and a modified layer 12. The positive electrode 10 comprises titanium (Ti), and the modified layer 12 is on the positive electrode 10. The modified layer 12 comprises a vanadium-based material, a conductive agent, and a binder. In an X-ray diffraction pattern of the vanadium-based material measured by an X-ray diffractometer (XRD) using CuKα1 ray, with an intensity of a peak at 2θ=8°±1.0° denoted as I₈ and an intensity of a peak at 2θ=20°±1.0° denoted as I₂₀, a ratio of I₈ over I₂₀ (I₈/I₂₀) satisfies 0<I₈/I₂₀≤1.4 (which will be described in detail later). Furthermore, in FIG. 1, a zinc-vanadium battery 1 is provided, and the zinc-vanadium battery 1 comprises the above-mentioned modified positive electrode structure (comprising the positive electrode 10 and the modified layer 12), a separator 14, a negative electrode 16, and an aqueous electrolyte 18. The separator 14 is on the modified layer 12, and the negative electrode 16 comprises zinc (Zn) and is on the separator 14. The positive electrode 10, the modified layer 12, the separator 14, and the negative electrode 16 are in the aqueous electrolyte 18. As a result, as compared to the zinc-vanadium battery known to the inventor (i.e., the zinc-vanadium battery without the above-mentioned modified positive electrode structure), the zinc-vanadium battery 1 comprising the above-mentioned modified positive electrode structure can have more stable charging and discharging performance, higher battery power, and longer service life (which will be described in detail later).

The positive electrode 10 may be a metal foil or a metal material with a porous structure (e.g., a metal mesh). The positive electrode 10 may be a metal foil comprising titanium (e.g., a titanium foil) or a metal material having a porous structure (e.g., a titanium mesh with the mesh size of the titanium mesh being about 100-500 nm). The thickness of the positive electrode 10 may be, but is not limited to, 5-50 µm, or, for example, about 10-50 µm. The thickness may be adjusted based on various requirements such as physical properties (e.g., tensile strength).

The modified layer 12 comprises the vanadium-based material (70-95 parts by weight), the conductive agent (3-45 parts by weight), and the binder (3-45 parts by weight). The total weight of the vanadium-based material, the conductive agent, and the binder is not limited to be equal to 100 parts by weight, and can be adjusted to be less than or greater than 100 parts by weight according to different demands. In some embodiments, the weights of the vanadium-based material, the conductive agent, and the binder are 80 parts by weight, 10 parts by weight, and 10 parts by weight, respectively; or, 90 parts by weight, 5 parts by weight, and 5 parts by weight, respectively; or, 92 parts by weight, 5 parts by weight, and 3 parts by weight, respectively; but the instant disclosure is not limited thereto. When the weights of the vanadium-based material, the conductive agent, and the binder are not added according to the aforementioned weight proportion (denoted as parts by weight), even if the modified positive electrode structure comprises the vanadium-based material, at least one of the charging and discharging performance, the battery power, and the service life of the zinc-vanadium battery manufactured according to the weight proportion cannot be obviously superior to the performance of the zinc-vanadium battery known to the inventor (i.e., the zinc-vanadium battery without the above-mentioned modified positive electrode structure). The thickness of the modified layer 12 may be, but is not limited to, 50-90 µm.

A ratio of I₈ over I₂₀ (I₈/I₂₀) of the vanadium-based material satisfies 0<I₈/I₂₀≤1.4 (which will be described in detail later) where an X-ray diffraction pattern of the vanadium-based material measured by an X-ray diffractometer (XRD) using CuKα1 ray, with an intensity of a peak at 2θ=8°±1.0° denoted as I₈ and an intensity of a peak at 2θ=20°±1.0° denoted as I₂₀ (which will be described in detail later). In some embodiments, I₈/I₂₀ satisfies 1.1≤I₈/I₂₀≤1.4. In some embodiments, I₈/I₂₀ satisfies 1.13≤I₈/I₂₀≤1.35. In some embodiments, I₈/I₂₀ is 0.1, 0.2, 0.3, 0.4, 0.5, 0.6, 0.7, 0.8, 0.9, 1.0, 1.1, 1.2, 1.3, 1.4, or any value between 0 and any of the above values, or any value between any two of the above values. In some embodiments, I₈ represents the intensity of a peak at 2θ=8°±0.5°, and I₂₀ represents the intensity of a peak at 2θ=20°±0.5°. When the ratio (i.e., I₈/I₂₀) of the vanadium-based material does not fall within the above range (e.g., less than the lower limit of the above range or greater than the upper limit of the above range), even if the modified positive electrode structure comprises the vanadium-based material, at least one of the charging and discharging performance, the battery power, and the service life of the zinc-vanadium battery manufactured according to the weight proportion cannot be obviously superior to the performance of the zinc-vanadium battery known to the inventor (i.e., the zinc-vanadium battery without the above-mentioned modified positive electrode structure).

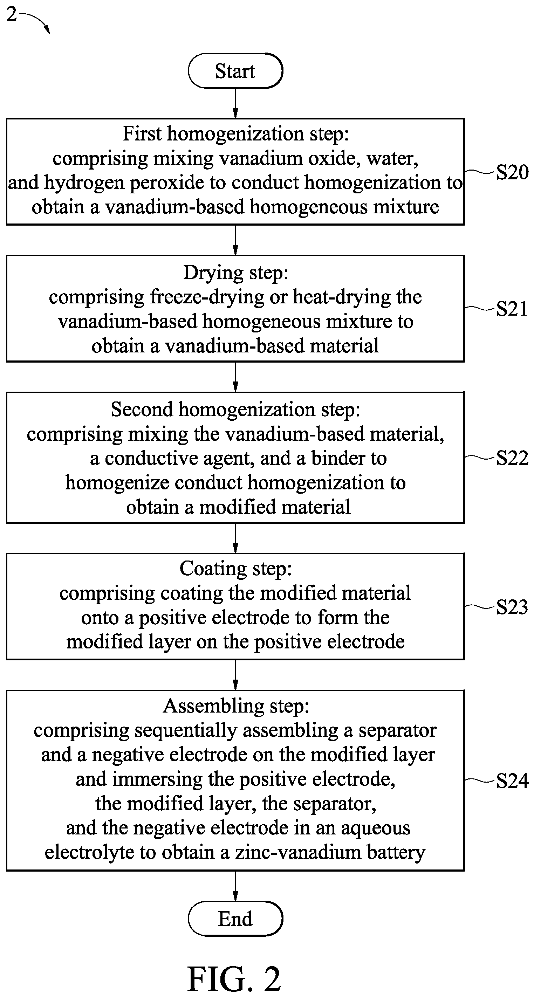

Please refer to FIG. 2. FIG. 2 illustrates a flowchart of a method 2 of manufacturing a zinc-vanadium battery 1 comprising a modified positive electrode structure according to some embodiments. The vanadium-based material may be a vanadium-based material prepared through, for example, some of the steps of the method 2 shown in FIG. 2; for example, through step S20 or steps S20-S21 of FIG. 2 (which will be described in detail later). Therefore, the vanadium-based material may comprise the initial material used in step S20 of FIG. 2, that is, vanadium oxide or derivatives of the vanadium oxide, and the ratio of I₈ over I₂₀ (I₈/I₂₀) of the vanadium-based material also satisfies the aforementioned relationship (e.g., 0<I₈/I₂₀≤1.4). The vanadium oxide may comprise any compound represented by the chemical formula VₓO_{y} (where x and y are both positive numbers), and impurities which do not affect the physicochemical properties of the vanadium oxide is not particularly excluded and may be doped in the vanadium oxide. For example, the vanadium oxide or derivatives of the vanadium oxide may be selected from the group consisting of V₂O₅, VO₂, NaV₃O₈·1.5H₂O, LiV₃O₈, Na₂V₆O₁₆·1.63H₂O, Fe₅V₁₅O₃₉(OH)₉·9H₂O, Zn₃V₂O₇(OH)₂·2H₂O, and derivatives thereof, or the vanadium oxide or derivatives of the vanadium oxide may be a mixture of at least two selected from the group consisting of V₂O₅, VO₂, NaV₃O₈·1.5H₂O, LiV₃O₈, Na₂V₆O₁₆·1.63H₂O, Fe₅V₁₅O₃₉(OH)₉·9H₂O, Zn₃V₂O₇(OH)₂·2H₂O, and derivatives thereof.

The conductive agent may comprise at least one selected from the group consisting of conductive carbon black and carbon nanotube (CNT). The conductive carbon black may be any commercially available conductive carbon black, for example, at least one selected from the group consisting of acetylene black, Ketjenblack, Super P, XC-72, N220, N330, N550, S204, FW200, VGCF, and KS6. In other words, the conductive carbon black may be selected from the group consisting of acetylene black, Ketjenblack, Super P, XC-72, N220, N330, N550, S204, FW200, VGCF, and KS6, or the conductive carbon black may be a mixture of at least two selected from the group consisting of acetylene black, Ketjenblack, Super P, XC-72, N220, N330, N550, S204, FW200, VGCF, and KS6. In some embodiments, the conductive carbon black comprises at least one selected from the group consisting of Super P and a mixture of Super P. The CNTs may be various commercially available CNTs, for example, at least one selected from the group consisting of single-walled carbon nanotube (SCNT) and multi-walled carbon nanotube (MCNT). In other words, the CNT may be selected from the group consisting of SCNT and MCNT, or the CNT may be a mixture of at least two selected from the group consisting of SCNT and MCNT.

The binder may comprise at least one selected from the group consisting of polyvinylidene fluoride (PVDF), polytetrafluoroethylene (PTFE), carboxymethyl cellulose (CMC), styrene-butadiene rubber (SBR), and polyimide (PI). In other words, the binder may be selected from the group consisting of PVDF, PTFE, CMC, SBR, and PI, or the binder may be a mixture of at least two selected from the group consisting of PVDF, PTFE, CMC, SBR, and PI. In some embodiments, the binder comprises at least one selected from the group consisting of PVDF and PTFE. In some embodiments, the binder comprises at least one selected from the group consisting of PVDF and a mixture of PVDF.

Please refer to FIG. 1. The separator 14 may comprise at least one selected from the group consisting of cellulose, synthetic fiber, and glass fiber. The synthetic fiber may be, for example, polyester fiber or polyaramid fiber. In some embodiments, the separator 14 comprises at least one selected from the group consisting of cellulose and glass fiber. The thickness of the separator 14 may be, but is not limited to, 30-400 µm.

Please still refer to FIG. 1. The negative electrode 16 may be a metal foil or a metal material with a porous structure (e.g., a metal mesh). The negative electrode 16 may be a metal foil comprising zinc (e.g., a zinc foil) or a metal material having a porous structure (e.g., a zinc mesh with the mesh size thereof not exceeding 1 µm). The purity of the zinc is, for example, 95 wt % or more with respect to the metal foil or the metal material. The thickness of the negative electrode 16 may be, but is not limited to, 10-50 µm, or, for example, about 20-50 µm. In some embodiments, the negative electrode 16 is a metal foil comprising zinc (e.g., a zinc foil), and the positive electrode 10 is a metal foil comprising titanium (e.g., a titanium foil).

Please still refer to FIG. 1. The aqueous electrolyte 18 may be a solution comprising organic salt or inorganic salt that is soluble in water and can release metal ions that are identical to the metal contained in the negative electrode 16. For example, if a metal foil containing zinc is used as the negative electrode 16, the aqueous electrolyte 18 should be selected to contain an organic salt or an inorganic salt that can release zinc ions (which is identical to the metal ions (i.e., zinc ions) contained in the negative electrode 16) after being dissolved in water. In this case, the aqueous electrolyte 18 may, for example, comprise at least one selected from the group consisting of zinc triflate (Zn(OTf)₂) and zinc sulfate (ZnSO₄). In some embodiments, the aqueous electrolyte 18 is an aqueous solution comprising Zn(OTf)₂ and water, and the weight ratio of Zn(OTf)₂ over water may be, but is not limited to, between 1:1 and 3:7, such as about 4:6. In some embodiments, the aqueous electrolyte 18 is an aqueous solution comprising 1-5M Zn(OTf)₂, for example, an aqueous solution comprising 2M Zn(OTf)₂. In some embodiments, the aqueous electrolyte 18 is an aqueous solution comprising ZnSO₄ and water. In some embodiments, the aqueous electrolyte 18 is an aqueous solution comprising 0.5-3M ZnSO₄.

Next, please refer to FIG. 2. FIG. 1 is used herein for auxiliary explanation, and FIG. 2 illustrates a method for manufacturing a modified positive electrode structure and illustrates a method 2 of manufacturing a zinc-vanadium battery 1 comprising the modified positive electrode structure. It should be noted that, before the zinc-vanadium battery 1 comprising the modified positive electrode structure is manufactured, the modified positive electrode structure should be manufactured first; in other words, the method of manufacturing the modified positive electrode structure may be included in the method 2 of manufacturing the zinc-vanadium battery 1 comprising the modified positive electrode structure. For example, the method of manufacturing the modified positive electrode structure may be steps S20-S23 of the method 2. Further, the method 2 of manufacturing the zinc-vanadium battery 1 comprising the modified positive electrode structure may be assembling the modified positive electrode structure, the separator 14, and the negative electrode 16 obtained through the steps S20-S23 with each other according to step S24, and immersing the assembled structure in an aqueous electrolyte 18 to achieve the manufacturing of the zinc-vanadium battery 1.

Specifically, please still refer to FIG. 2, where a method 2 of manufacturing a zinc-vanadium battery 1 comprising the modified positive electrode structure may comprise steps S20-S24.

Step S20 is a first homogenization step, and step S20 comprises mixing vanadium oxide, water, and hydrogen peroxide to conduct homogenization to obtain a vanadium-based homogeneous mixture. For example, step S20 is conducted by homogenizing (e.g., stirring) the vanadium oxide, the water, and the hydrogen peroxide in a weight ratio of 7:120:2-12 in sequence for 12-15 hours under a normal condition to obtain the vanadium-based homogeneous mixture. The normal condition may be a process environment with a humidity of 40% or less. In some embodiments, step S20 is conducted at room temperature and pressure. In some embodiments, the weights of the vanadium oxide, the water, and the hydrogen peroxide are sequentially 35 g, 600 g, and 10 g (i.e., 7:120:2), or 35 g, 600 g, and 20 g (i.e., 7:120:4), or 35 g, 600 g, and 60 g (i.e., 7:120:12); that is, the weight ratio of water over hydrogen peroxide may be 60:1, 30:1 or 10:1. The implementation of the vanadium oxide may be referred to the above description and will not be further described in detail herein. Water and hydrogen peroxide may be commercially available or laboratory-grade water and hydrogen peroxide that can be obtained by a person of ordinary skill in the art, which are not limited herein. In step S20, since the crystals of vanadium oxide itself will form stacked layered structures, the interlayer spacing of the layered structures will be stretched and further expanded through the reaction of hydrogen peroxide and vanadium oxide. Furthermore, because the interlayer spacing between the layered structures is expanded, a larger charge storage can be provided during the subsequent charging and discharging process of the zinc-vanadium battery 1, and the difficulty of ion exchange between the layered structures can also be reduced. Therefore, in some embodiments, the problem of battery power decay of the zinc-vanadium battery 1 after multiple charging and discharging cycles can be avoided, thereby extending the service life of the zinc-vanadium battery 1.

Step S21 is a drying step, and step S21 comprises further freeze-drying or heat-drying the vanadium-based homogeneous mixture obtained in step S20 to obtain a vanadium-based material.

In some embodiments, the heat-drying in step S21 is conducted by first removing the solvent contained in the vanadium-based homogeneous mixture obtained in step S20, and then placing the vanadium-based homogeneous mixture in an oven to dry under vacuum and high temperature to obtain the vanadium-based material. The step of removing the solvent contained in the vanadium-based homogeneous mixture may be conducted through a filtration step, a concentration step, or both the filtration step and the concentration step. The filtration step may be conducted, for example, by vacuum filtration, gravity filtration, pressure filtration, or centrifugal filtration, which is not limited herein; and the concentration step may be conducted, for example, by cyclotron concentration or reduced pressure concentration, which is not limited herein. In some embodiments, the step of drying the vanadium-based material under vacuum and high temperature may be conducted by heating the environment of the vanadium-based material to about 50-70°C. (e.g., about 60°C) and maintaining the temperature overnight. In addition, in some embodiments, in step S20, an organic solvent (e.g., N-methyl-2-pyrrolidone (NMP)) may be added to the vanadium-based material to improve the vacuum filtration efficiency through the substitution between NMP and water, and then step S21 is conducted, where the vanadium-based material is dried, for example, by the aforementioned heat-drying, to obtain the vanadium-based material. In some embodiments, the vanadium-based material obtained by the aforementioned heat-drying may be further appropriately ground to further refine the agglomerated vanadium-based material after the drying.

In some embodiments, the freeze-drying in step S21 refers to freezing the vanadium-based homogeneous mixture obtained in step S20 to a frozen state before the heat-drying, and then evacuating and heating the mixture so that water molecules in the vanadium-based homogeneous mixture can be sublimated directly from a solid state. Therefore, in some embodiments, through the freeze-drying, agglomeration of the dried vanadium-based material can be avoided, so that softer dried powders can be provided.

After completing step S21, the obtained vanadium-based material may be further measured by an X-ray diffractometer (XRD) using CuKα1 ray. In the X-ray diffraction pattern of the vanadium-based material, a peak with an intensity denoted as I₈ appears at the position of 2θ=8°±1.0°, a peak with an intensity denoted as I₂₀ appears at the position of 2θ=20°±1.0°, and a ratio of I₈ over I₂₀ (I₈/I₂₀) satisfies 0<I₈/I₂₀≤1.4 (e.g., 1.1≤I₈/I₂₀≤1.4). In some embodiments, through the above XRD measurement, whether the vanadium-based material manufactured in step S21 can be applied in the subsequent manufacturing of the zinc-vanadium battery 1 can be confirmed earlier, thereby reducing manufacturing costs.

Step S22 is a second homogenization step, and the step S22 comprises mixing the vanadium-based material obtained by step S21, the conductive agent, and the binder to conduct homogenization to obtain a modified material. For example, step S22 is conducted by homogenizing (e.g., stirring) the vanadium-based material, the conductive agent, and the binder in a weight ratio of 70-95:3-45:3-45 for 1-15 hours under a normal condition to obtain the modified material. The normal condition may be a process environment with a humidity of 40% or less. In some embodiments, step S22 is conducted at room temperature and pressure. In some embodiments, the weights of the vanadium-based material, the conductive agent, and the binder are sequentially 70-95 parts by weight, 3-45 parts by weight, and 3-45 parts by weight; for example, the weights of the vanadium-based material, the conductive agent, and the binder are sequentially 80 parts by weight, 10 parts by weight, and 10 parts by weight. The implementations of the vanadium-based material, the conductive agent, and the binder may be referred to the above descriptions and will not be further described in detail herein. In addition, in some embodiments, in step S22, the vanadium-based material, the conductive agent, and the binder may be added to an organic solvent (e.g., NMP) for homogenization so that the vanadium-based material, the conductive agent, and the binder may be more fully and evenly dispersed in the organic solvent, thereby avoiding agglomeration and particles. In some embodiments, the modified material obtained in step S22 needs to meet the particle size requirement; for example, the particle size of the modified material needs to be less than 60 µm.

Step S23 is a coating step, and step S23 comprises coating the modified material obtained by step S22 onto the positive electrode 10 (shown in FIG. 1) to form the modified layer 12 on the positive electrode 10. For example, the modified material may be coated on the positive electrode 10 by a frame coating member. In some embodiments, after coating the modified material on the positive electrode 10, the modified material and the positive electrode 10 are further subjected to a drying step to complete the modified layer 12; for example, the modified layer 12 on the positive electrode 10 and the positive electrode 10 are dried at about 80-100°C (e.g., about 100°C) for about 1 hour to complete step S23. The implementations of the positive electrode 10 and the modified layer 12 may be referred to the above descriptions and will not be further described in detail herein.

After completing step S23 of FIG. 2, the obtained modified layer 12 on the positive electrode 10 can be used as the aforementioned modified positive electrode structure. In some embodiments, step S24 is further conducted on the obtained modified positive electrode structure according to FIG. 2, so that a zinc-vanadium battery 1 can be further obtained.

Please still refer to FIG. 2. Step S24 is an assembling step, and step S24 comprises sequentially assembling the separator 14 and the negative electrode 16 on the modified layer 12 and immersing the positive electrode 10, the modified layer 12, the separator 14, and the negative electrode 16 in the aqueous electrolyte 18 (shown in FIG. 1) to obtain the zinc-vanadium battery 1. For example, the modified positive electrode structure (comprising the positive electrode 10 and the modified layer 12), the separator 14, and the negative electrode 16 are assembled in sequence and packaged by a hydraulic press according to the specifications of a CR2032 button cell to obtain the final zinc-vanadium battery 1. The implementations of the positive electrode 10, the modified layer 12, the separator 14, the negative electrode 16, and the aqueous electrolyte 18 may be referred to the above descriptions and will not be further described in detail herein. In some embodiments, the thickness of the positive electrode 10 is about 5-50 µm, the thickness of the modified layer 12 is about 70-90 µm, the thickness of the separator 14 is about 30-400 µm, and the thickness of the negative electrode 16 is about 10-50 µm.

The following describes the ratios I₈/I₂₀ of unmodified and modified vanadium-based materials through X-ray diffraction patterns of Comparative Example and Experimental Examples 1 and 2.

### Comparative Example: Zinc-vanadium battery comprising unmodified vanadium-based material (I₈/I₂₀=0)

### Material selection:

(1) Positive electrode: comprising a titanium foil, with a thickness of about 50 µm.
(2) Unmodified layer: comprising vanadium oxide (V₂O₅), conductive agent (conductive carbon black), binder (PVDF), and organic solvent (NMP), with a thickness of about 88 µm. The specifications of the vanadium oxide used in this Comparative Example are as follows: CAS No. 1314-62-1; average particle size of 50 µm; purity of >99%; and the vanadium oxide having a peak at the position of 2θ=20°±1.0° without corresponding peak (i.e., I₈=0) at the position of 2θ=8°±1.0°, resulting in the ratio I₈/I₂₀=0.
(3) Separator: comprising glass fiber, with a thickness of about 350 µm.
(4) Negative electrode: comprising a zinc foil, with a thickness of about 50 µm.
(5) Aqueous electrolyte: comprising 2M Zn(OTf)₂ and water, sequentially in a weight ratio of 42.28 parts by weight and 57.72 parts by weight.

### Manufacturing method:

(1) mixing 80 parts by weight of vanadium oxide (V₂O₅), 10 parts by weight of a conductive agent, and 10 parts by weight of a binder in an organic solvent to conduct homogenization to obtain a vanadium-based material (without apparent agglomerated particles and a particle size of less than 60 µm);
(2) coating the vanadium-based material on a titanium foil used as a positive electrode by using a frame coating member, and drying the titanium foil and the vanadium-based material at 100°C for 1 hour to obtain a coating layer;
(3) assembling the positive electrode, the coating layer, a separator, and a negative electrode with each other, and immersing the assembled structure in an aqueous electrolyte;
(4) packaging the assembled structure immersed in the aqueous electrolyte in accordance to the specifications of the CR2032 button battery by using a hydraulic press to obtain a zinc-vanadium battery as the Comparative Example.

### XRD measurement results: Vanadium-based materials used in Comparative Example

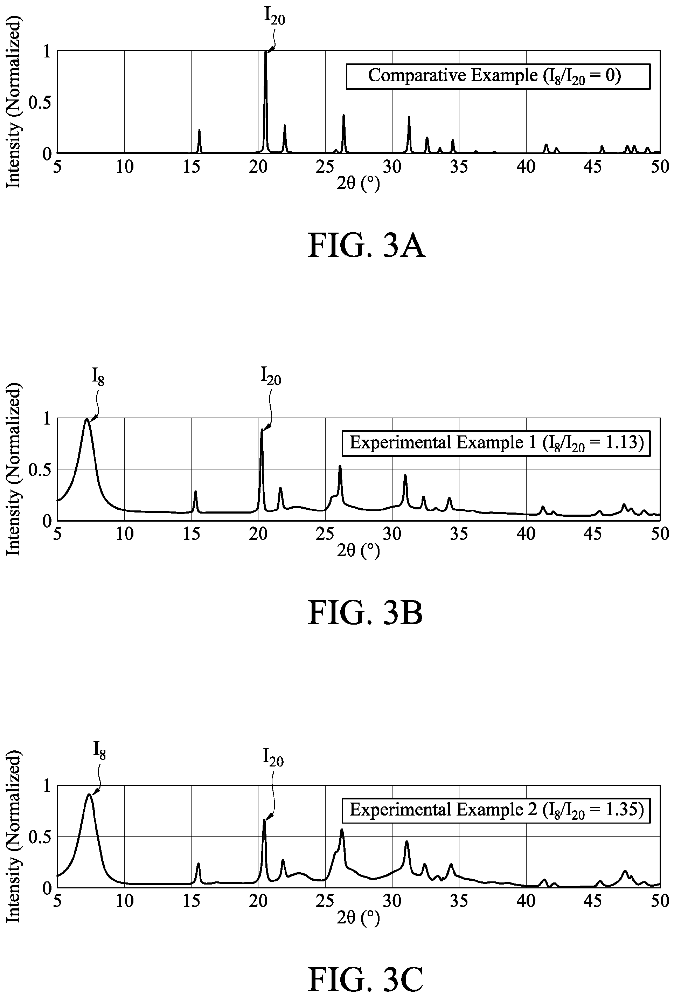

Please refer to FIG. 3A. FIG. 3A is an X-ray diffraction pattern of a vanadium-based material of Comparative Example (known to the inventor) measured by an XRD using CuKα1 ray. It can be seen from the XRD measurement results of FIG. 3A that if hydrogen peroxide and water were not used to modify vanadium oxide (V₂O₅), even if rest of the materials and processes used are the same as those of Experimental Example 1 and Experimental Example 2 of the instant disclosure (which will be described in detail later), the zinc-vanadium material still would not have a corresponding peak at the position of 2θ=8°±1.0° (i.e., I₈=0), resulting in I₈/I₂₀=0.

### Experimental Example 1: Zinc-vanadium battery 1 comprising modified vanadium-based material (I₈/I₂₀=1.13) according to some embodiments of the instant disclosure

### Material selection:

(1) Positive electrode 10: comprising a titanium foil, with a thickness of about 50 µm;
(2) Vanadium-based homogeneous mixture: comprising vanadium oxide (V₂O₅), water, and hydrogen peroxide, sequentially in a weight proportion of 35 parts by weight, 600 parts by weight, and 10 parts by weight. The specifications of the vanadium oxide used in this Example are as follows: CAS No. 1314-62-1; average particle size of 50 µm; purity of >99%; and the vanadium oxide having a peak at the position of 2θ=20°±1.0° without corresponding peak (i.e., I₈=0) at the position of 2θ=8°±1.0°, resulting in the ratio I₈/I₂₀=0;
(3) Modified layer 12: comprising vanadium-based material (obtained by drying the vanadium-based homogeneous mixture), conductive agent (conductive carbon black), binder (PVDF), and organic solvent (NMP), with a thickness of about 88 µm.
(4) Separator 14: comprising glass fiber, with a thickness of about 350 µm.
(5) Negative electrode 16: comprising a zinc foil, with a thickness of about 50 µm.
(6) Aqueous electrolyte 18: comprising 1-5M Zn(OTf)₂ (which was set to be 2M Zn(OTf)₂ in this Example) and water, sequentially in a weight ratio of 42.28 parts by weight and 57.72 parts by weight.

### Manufacturing method:

(1) mixing 35 parts by weight of vanadium oxide (V₂O₅), 600 parts by weight of water, and 60 parts by weight of hydrogen peroxide to conduct homogenization to obtain a vanadium-based homogeneous mixture;
(2) freezing the vanadium-based homogeneous mixture to a frozen state, vacuuming the environment of the mixture, and heating the resulting mixture to 40°C for 12 hours or more (which was set to be 12 hours in this Example) to obtain a vanadium-based material in the form of a dry powder; and then measuring the vanadium-based material by XRD to confirm the ratio I₈/I₂₀ of the X-ray diffraction pattern of the vanadium-based material;
(3) mixing 80 parts by weight of the vanadium-based material, 10 parts by weight of a conductive agent, and 10 parts by weight of a binder in an organic solvent to conduct homogenization to obtain a modified material (without apparent agglomerated particles and a particle size of less than 60 µm);
(4) coating the modified material on a titanium foil used as a positive electrode 10 by using a frame coating member, and drying the titanium foil and the modified material at 100°C for 1 hour to obtain a modified layer 12;
(5) assembling the positive electrode 10, the modified layer 12, a separator 14, and a negative electrode 16 with each other, and immersing the assembled structure in an aqueous electrolyte 18;
(6) packaging the assembled structure immersed in the aqueous electrolyte 18 in accordance to the specifications of the CR2032 button battery by using a hydraulic press to obtain a zinc-vanadium battery 1 as the Experimental Example 1.

### XRD measurement results: Vanadium-based materials used in Experimental Example 1

Please refer to FIG. 3B. FIG. 3B is an X-ray diffraction pattern of a vanadium-based material of Experimental Example 1 (according to some embodiments of the instant disclosure) measured by an XRD using CuKα1 ray. It can be seen from the XRD measurement results of FIG. 3B that because the vanadium-based material used in Experimental Example 1 was a vanadium-based material obtained by modifying vanadium oxide (V₂O₅) at least through hydrogen peroxide and water, not only did a corresponding peak (I₂₀) appear at the position of 2θ=20°±1.0°, but a corresponding peak (I₈) also appeared at the position of 2θ=8°±1.0°. Accordingly, the ratio I₈/I₂₀ was calculated to be 1.13.

### Experimental Example 2: Zinc-vanadium battery 1 comprising modified vanadium-based material (I₈/I₂₀=1.35) according to some embodiments of the instant disclosure

Material selection: identical to those of Experimental Example 1, which can be referred to the description in Experimental Example 1 and thus is not further described in detail herein.

Manufacturing method: identical to those of Experimental Example 1, which can be referred to the description in Experimental Example 1 and thus is not further described in detail herein.

### XRD measurement results: Vanadium-based materials used in Experimental Example 2

Please refer to FIG. 3C. FIG. 3C is an X-ray diffraction pattern of a vanadium-based material of Experimental Example 2 (according to some embodiments of the instant disclosure) measured by an XRD using CuKα1 ray. It can be seen from the XRD measurement results of FIG. 3C that, similarly to those of Experimental Example 1, because the vanadium-based material used in Experimental Example 2 was a vanadium-based material obtained by modifying vanadium oxide (V₂O₅) at least through hydrogen peroxide and water, not only did a corresponding peak (I₂₀) appear at the position of 2θ=20°±1.0°, but a corresponding peak (I₈) also appeared at the position of 2θ=8°±1.0°. Accordingly, the ratio I₈/I₂₀ was calculated to be 1.35.

Based on the XRD measurement results of the above Comparative Example and Experimental Examples 1 and 2, it can be seen that only the X-ray diffraction patterns of Experimental Examples 1 and 2 (the vanadium-based materials thereof were the vanadium-based materials obtained by modifying vanadium oxide (V₂O₅) at least hydrogen peroxide and water) would have peaks at both the position of 2θ=8°±1.0° and the position of 2θ=20°±1.0°, and the two obtained peaks satisfied the peak intensity relationship of 0<I₈/I₂₀≤1.4, and also satisfied the peak intensity relationship of 1.1≤I₈/I₂₀≤1.4.

The following Testing Examples 1 and 2 are used to illustrate the battery discharge capacity and average service life of Comparative Example and Experimental Examples 1 and 2, respectively.

### Testing Example 1: Battery discharge capacity

### Test method:

The battery test method used in this Testing Example was a constant current charge and discharge test. Each tested battery was discharged through a charger and discharger at a preset constant current (usually referred to as current density, with the weight of the electrode reactants as the reference value, and the current density could be set to be 100 mA/g or 200 mA/g (which was set to be 200 mA/g in this Testing Example)), and the time of the discharge process and the total power were recorded. The product of the time and the total charge capacity was then divided by the weight of the positive electrode to give the battery's gram capacity in milliampere-hours per gram (mAh/g).

### Test results:

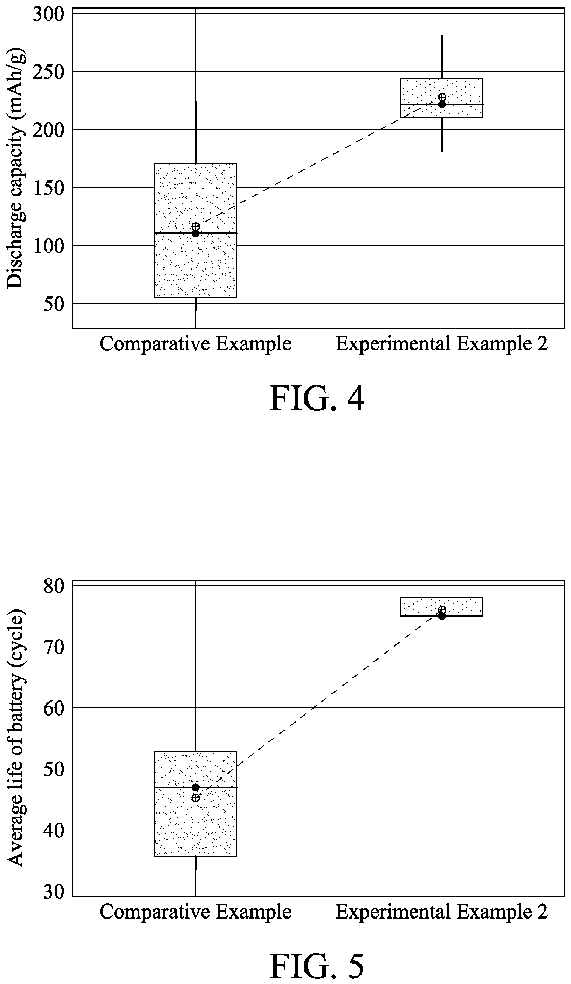

Please refer to TABLE 1 and FIG. 4. FIG. 4 is a graph comparing discharge capacities of a zinc-vanadium battery comprising the vanadium-based material of Comparative Example and a zinc-vanadium battery 1 comprising the vanadium-based material of Experimental Example 2. It can be seen from the test results of the battery discharge capacities shown in TABLE 1 and FIG. 4 that the average discharge capacities of the batteries of Experimental Examples 1 and 2 were about 217 mAh/g and 203 mAh/g, respectively. Compared with the average discharge capacity of the battery of Comparative Example (i.e., about 116 mAh/g), the average discharge capacities of the batteries of Experimental Examples 1 and 2 were increased by about 87.1% and 75.0%, respectively. In other words, the modified layers 12 of the zinc-vanadium batteries 1 of Experimental Examples 1 and 2 were made of modified vanadium-based materials obtained by modifying vanadium oxide (V₂O₅) at least through hydrogen peroxide and water, and thus the average battery discharge capacities according to some embodiments can be greatly improved. Therefore, in some embodiments, the zinc-vanadium battery 1 comprising a vanadium-based material with a ratio I₈/I₂₀ falling at least within a range between 1.13 and 1.35 (i.e., 1.1≤I₈/I₂₀≤1.4) can indeed have a greatly improved average battery discharge capacity.

**TABLE 1: Battery discharge capacity**

| | Ratio I₈/I₂₀ in the X-ray diffraction pattern | Average battery discharge capacity (mAh/g) |
|---|---|---|
| Comparative Example | 0 | 116 |
| Experimental Example 1 | 1.13 | 217 |
| Experimental Example 2 | 1.35 | 203 |

### Testing Example 2: Average service life of battery

### Test method:

In this Testing Example, the battery operating voltage range might be set between 0.2 V and 2.0 V (which was set to be 2.0 V in this Testing Example) through a charger and discharger, and the batteries of Comparative Example, Experimental Examples 1 and 2 were continuously charged at least 30 times at a fixed current density of 100 mA/g or 200 mA/g (which was set to be 200 mA/g in this Testing Example) to test the average service life of the batteries.

### Test results:

Please refer to TABLE 2 and FIG. 5. FIG. 5 is a graph comparing average service life of batteries of a zinc-vanadium battery comprising the vanadium-based material of Comparative Example and a zinc-vanadium battery comprising the vanadium-based material of Experimental Example 2. It can be seen from the test results of the average service life of batteries shown in TABLE 2 and FIG. 5 that the average service life of batteries of Experimental Examples 1 and 2 were about 75 cycles and 54 cycles, respectively. Compared with the average service life of battery of Comparative Example (i.e., about 45 cycles), the average service life of batteries of Experimental Examples 1 and 2 were increased by about 66.7% and 20.0%, respectively. In other words, the modified layers 12 of the zinc-vanadium batteries 1 of Experimental Examples 1 and 2 were made of modified vanadium-based materials obtained by modifying vanadium oxide (V₂O₅) at least through hydrogen peroxide and water, and thus the average service life of batteries according to some embodiments can be greatly improved. Therefore, in some embodiments, the zinc-vanadium battery 1 comprising a vanadium-based material with a ratio I₈/I₂₀ falling at least within a range between 1.13 and 1.35 (i.e., 1.1≤I₈/I₂₀≤1.4) can indeed have a greatly improved average service life of battery.

**TABLE 2: Average service life of battery**

| | Ratio I₈/I₂₀ in the X-ray diffraction pattern | Average service life of battery (cycles) |
|---|---|---|
| Comparative Example | 0 | 45 |
| Experimental Example 1 | 1.13 | 75 |
| Experimental Example 2 | 1.35 | 54 |

To sum up, a modified positive electrode structure according to some embodiments comprises a vanadium-based material obtained by modifying vanadium oxide through hydrogen peroxide and water. As compared with traditional zinc-vanadium batteries that do not comprise such modified vanadium-based materials, in some embodiments, a zinc-vanadium batteries comprising such a modified positive electrode structure (i.e., comprising the modified vanadium-based material) can have greatly improved average battery discharge capacity of a zinc-vanadium battery and average service life of the battery. Furthermore, since the modified positive electrode structure is used as a positive electrode in a zinc-vanadium battery, the solution provided by some embodiments is distinct from the currently-common method of adjusting the aqueous electrolyte, and can still produce a greatly improvement in the average battery discharge capacity and average service life of battery.

## Claims

1. A modified positive electrode structure, comprising:
a positive electrode (10) comprising titanium; and
a modified layer (12) on the positive electrode (10), wherein the modified layer (12) comprises:
a vanadium-based material, 70-95 parts by weight;
a conductive agent, 3-45 parts by weight; and
a binder, 3-45 parts by weight;
wherein in an X-ray diffraction pattern of the vanadium-based material measured by an X-ray diffractometer (XRD) using CuKα1 ray, with an intensity of a peak at 2θ=8°±1.0° denoted as I₈ and an intensity of a peak at 2θ=20°±1.0° denoted as I₂₀, a ratio of I₈ over I₂₀ (I₈/I₂₀) satisfies 0<I₈/I₂₀≤1.4.

2. The modified positive electrode structure according to claim 1, wherein the ratio of I₈ over I₂₀ (I₈/I₂₀) satisfies 1.1≤I₈/I₂₀≤1.4.

3. The modified positive electrode structure according to any one of claims 1-2, wherein the conductive agent comprises at least one selected from the group consisting of conductive carbon black and carbon nanotube.

4. The modified positive electrode structure according to any one of claims 1-3, wherein the binder comprises at least one selected from the group consisting of polyvinylidene fluoride (PVDF), polytetrafluoroethylene (PTFE), carboxymethyl cellulose (CMC), styrene-butadiene rubber (SBR), and polyimide.

5. The modified positive electrode structure according to any one of claims 1-4, wherein a thickness of the positive electrode (10) is 10-50 µm and a thickness of the modified layer (12) is 50-90 µm.

6. A method of manufacturing the modified positive electrode structure according to any one of claims 1-5, comprising:
a first homogenization step (S20) comprising mixing vanadium oxide, water, and hydrogen peroxide to conduct homogenization to obtain a vanadium-based homogeneous mixture;
a drying step (S21) comprising freeze-drying or heat-drying the vanadium-based homogeneous mixture to obtain the vanadium-based material;
a second homogenization step (S22) comprising mixing the vanadium-based material, the conductive agent, and the binder to conduct homogenization to obtain a modified material; and
a coating step (S23) comprising coating the modified material onto the positive electrode (10) to form the modified layer (12) on the positive electrode (10).

7. The method according to claim 6, wherein:
the first homogenization step (S20) comprises at room temperature and pressure, homogenizing the vanadium oxide, the water, and the hydrogen peroxide in a weight ratio of 7:120:2-12 in sequence to obtain the vanadium-based homogeneous mixture; and
the second homogenization step (S22) comprises at room temperature and pressure, homogenizing the vanadium-based material, the conductive agent, and the binder in a weight ratio of 70-95:3-45:3-45 in sequence to obtain the modified material.

8. A zinc-vanadium battery (1), comprising:
a positive electrode (10) comprising titanium;
a modified layer (12) on the positive electrode (10), wherein the modified layer (12) comprises:
a vanadium-based material, 70-95 parts by weight;
a conductive agent, 3-45 parts by weight; and
a binder, 3-45 parts by weight;
a separator (14) on the modified layer (12);
a negative electrode (16) comprising zinc and on the separator (14); and
an aqueous electrolyte (18), wherein the positive electrode (10), the modified layer (12), the separator (14), and the negative electrode (16) are in the aqueous electrolyte (18);
wherein in an X-ray diffraction pattern of the vanadium-based material measured by an X-ray diffractometer (XRD) using CuKα1 ray, with an intensity of a peak at 2θ=8°±1.0° denoted as I₈ and an intensity of a peak at 2θ=20°±1.0° denoted as I₂₀, a ratio of I₈ over I₂₀ (I₈/I₂₀) satisfies 0<I₈/I₂₀≤1.4.

9. The zinc-vanadium battery (1) according to claim 8, wherein the ratio of I₈ over I₂₀ (I₈/I₂₀) satisfies 1.1≤I₈/I₂₀≤1.4.

10. The zinc-vanadium battery (1) according to any one of claims 8-9, wherein the conductive agent comprises at least one selected from the group consisting of conductive carbon black and carbon nanotube.

11. The zinc-vanadium battery (1) according to any one of claims 8-10, wherein the binder comprises at least one selected from the group consisting of polyvinylidene fluoride (PVDF), polytetrafluoroethylene (PTFE), carboxymethyl cellulose (CMC), styrene-butadiene rubber (SBR), and polyimide.

12. The zinc-vanadium battery (1) according to any one of claims 8-11, wherein the separator (14) comprises at least one selected from the group consisting of cellulose and glass fiber.

13. The zinc-vanadium battery (1) according to any one of claims 8-12, wherein the aqueous electrolyte (18) is an aqueous solution comprising zinc triflate (Zn(OTf)₂).

14. The zinc-vanadium battery (1) according to claim 13, wherein the aqueous solution comprises Zn(OTf)₂ and water, and a weight ratio of Zn(OTf)₂ over water is between 1:1 and 3:7.

15. The zinc-vanadium battery (1) according to any one of claims 8-14, wherein a thickness of the positive electrode (10) is 10-50 µm, a thickness of the modified layer (12) is 50-90 µm, a thickness of the separator (14) is 30-400 µm, and the negative electrode (16) is 10-50 µm.

16. A method (2) of manufacturing the zinc-vanadium battery (1) according to any one of claims 8-15, comprising:
a first homogenization step (S20) comprising mixing vanadium oxide, water, and hydrogen peroxide to conduct homogenization to obtain a vanadium-based homogeneous mixture;
a drying step (S21) comprising freeze-drying or heat-drying the vanadium-based homogeneous mixture to obtain the vanadium-based material;
a second homogenization step (S22) comprising mixing the vanadium-based material, the conductive agent, and the binder to conduct homogenization to obtain a modified material;
a coating step (S23) comprising coating the modified material onto the positive electrode (10) to form the modified layer (12) on the positive electrode (10); and
an assembling step (S24) comprising sequentially assembling the separator (14) and the negative electrode (16) on the modified layer (12) and immersing the positive electrode (10), the modified layer (12), the separator (14), and the negative electrode (16) in the aqueous electrolyte (18) to obtain the zinc-vanadium battery (1).

17. The method (2) according to claim 16, wherein:
the first homogenization step (S20) comprises at room temperature and pressure, homogenizing the vanadium oxide, the water, and the hydrogen peroxide in a weight ratio of 7:120:2-12 in sequence to obtain the vanadium-based homogeneous mixture; and
the second homogenization step (S22) comprises at room temperature and pressure, homogenizing the vanadium-based material, the conductive agent, and the binder in a weight ratio of 70-95:3-45:3-45 in sequence to obtain the modified material.
